(19) Europäisches Patentamt European Patent Office Office européen des brevets

(11) **EP 3 040 201 B1**

(12) **EUROPEAN PATENT SPECIFICATION**

(45) Date of publication and mention of the grant of the patent:
**18.11.2020 Bulletin 2020/47**

(21) Application number: **14839560.1**

(22) Date of filing: **26.06.2014**

(51) Int Cl.:
*B32B 27/32* (2006.01)     *B32B 1/08* (2006.01)
*C08F 8/46* (2006.01)     *C08G 69/26* (2006.01)
*F16L 9/12* (2006.01)     *F16L 11/12* (2006.01)
*B32B 27/34* (2006.01)     *C08L 77/06* (2006.01)
*F16L 11/04* (2006.01)     *B32B 27/08* (2006.01)

(86) International application number:
**PCT/JP2014/067051**

(87) International publication number:
**WO 2015/029571 (05.03.2015 Gazette 2015/09)**

(54) **MULTILAYER STRUCTURE**

**MEHRSCHICHTIGE STRUKTUR**

**STRUCTURE MULTICOUCHE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2013 JP 2013178534**

(43) Date of publication of application:
**06.07.2016 Bulletin 2016/27**

(73) Proprietor: **Mitsubishi Gas Chemical Company, Inc.**
**Tokyo 100-8324 (JP)**

(72) Inventors:
• **SATO, Kazuya**
**Hiratsuka-shi**
**Kanagawa 254-0016 (JP)**
• **KATO, Tomonori**
**Hiratsuka-shi**
**Kanagawa 254-0016 (JP)**
• **MITADERA, Jun**
**Hiratsuka-shi**
**Kanagawa 254-0016 (JP)**

(74) Representative: **Vossius & Partner Patentanwälte Rechtsanwälte mbB**
**Siebertstrasse 3**
**81675 München (DE)**

(56) References cited:
EP-A1- 1 562 749     CA-A1- 2 461 389
CA-A1- 2 509 518     JP-A- H0 665 451
JP-A- S6 281 437     JP-A- H03 108 534
JP-A- H08 502 806     JP-A- 2001 277 441
JP-A- 2002 340 242     JP-A- 2003 001 770
JP-A- 2006 001 280

**Description**

Technical Field

The present invention relates to a multilayer structure excellent in flexibility and fuel barrier properties.

Background Art

Heretofore, cylindrical molded bodies such as hoses, tubes, pipes and the like formed of polyolefins are used in wide-range applications because of high chemical resistance thereof, and used as, for example, water service piping for supplying tap water to each house.

In supplying tap water to each house, water service piping is buried under the ground from a tap water main pipe to each house. Among the polyolefin-made cylindrical molded bodies, a polyethylene-made cylindrical molded body is lightweight and excellent in flexibility, and is suitable for being conveyed, at a state where it is wound around a winding core, into a job site at which the water service piping is buried. For those reasons, in general, a polyethylene pipe is used for the water service piping and widely diffused.

Meanwhile, fuel piping, such as kerosene piping, etc., is also buried under the ground. For this fuel piping, a lot of copper-made pipes are chiefly used, and there may be the case where a slight fuel leak in the ground is generated due to deterioration of the fuel piping. For that reason, in the case where the fuel piping is buried in the vicinity of the water service piping buried under the ground, the fuel leaked from the fuel piping penetrates into water in the polyethylene pipe, thereby causing such a problem that the tap water is scented with a fuel smell.

In order to solve the foregoing problem, for example, PTL 1 proposes a method in which a metal laminate film in which a resin layer and a metal layer are laminated is used as a protective cover for water service piping, and water service piping to be buried under the ground is covered by the protective cover for water service piping.

PTL 2 discloses a structure successively comprising a first layer of high density polyethylene (HDPE), a first tie layer, a second layer of EVOH or of a blend based on EVOH, optionally a second tie layer, a third layer of a blend.

PTL 3 comprises a multilayer structure based on polyamides and graft copolymers having polyamide blocks comprising, in this order:

a first layer (1) formed from a polyamide (A) or a polyamide (A)/polyolefin (B) blend having a polyamide matrix;
a second layer (2) based on a graft copolymer having polyamide blocks.

PTL 4 relates to a multilayer article prepared by rotational moulding that comprises: a) a layer A that is a polyolefin(PO)-based layer and a layer B comprising a PO that is dissimilar from that of layer A or a non-polyolefin or a mixture thereof and optionally a layer C prepared from a polymer that is dissimilar from that of layer A and that is similar or dissimilar from that of layer B.

PTL 5 discloses a porous pipe formed from particles of vulcanized rubber dispersed in a binder resin.

PTL 6 relates to a composition consisting of a substantially amorphous chlorinated polyethylene rubber obtained by chlorinating polyethylene having a molecular weight of 50,000 or more to a chlorine content of 25 to 45% by weight by an aqueous suspension method.

PTL 7 refers to a transfer pipe for drinking water comprising a main layer consisting of a polyolefin coated on the outside with a layer of a hydrocarbon-proof thermoplastic polymer.

Citation List

Patent Literature

PTL 1: Japanese Patent No. 4230060
PTL 2: CA 2 509 518
PTL 3: CA 2 461 389
PTL 4: EP 1 562 749
PTL 5: JP H08 502806
PTL 6: JP S62 81437
PTL 7: JP 2002-340242

## Summary of Invention

### Technical Problem

However, since the above-mentioned method requires processing of further covering the pipes once molded with a protective cover, the method is inferior in point of productivity of water service piping and the operation thereof is complicated, which could not be said to be practicable. Accordingly, fuel barrier properties of water service piping alone not requiring any protective cover or the like is desired.

Given the situation, an object of the present invention is to provide a multilayer structure being excellent in flexibility and fuel barrier properties, which is applicable to a water service piping, while having excellent flexibility of polyolefin-made ones.

### Solution to Problem

The present inventors have found that a multilayer structure including a polyolefin layer and a specific polyamide resin composition layer as disclosed in claims 1-11 can solve the above-mentioned problems.

### Advantageous Effects of Invention

The present invention can provide a multilayer structure excellent in flexibility and fuel barrier properties while having excellent flexibility of polyolefin-made cylindrical molded bodies, and can further provide water service piping having the above-mentioned characteristics of the multilayer structure.

### Description of Embodiments

The multilayer structure of the present invention includes at least a polyolefin layer (A) and a polyamide resin composition layer (B) as constituent layers, and examples of specific embodiments thereof are described below.

In this specification, "containing as the main component" means that the composition may contain any other unit within a range not detracting from the effects of the multilayer structure of the present invention, and concretely, the main component is a component that accounts for about 80% by mass or more of all the components constituting each layer, preferably 90% by mass or more and 100% by mass or less. However, "containing as the main component" is not limited to the above-mentioned content.

[Polyolefin Layer (A)]

The polyolefin layer (A) is a layer containing a polyolefin resin as the main component. As the polyolefin resin, for example, usable are polyethylene, polypropylene, etc., which may be a homopolymer or a copolymer. Among polyolefin resins, preferred is polyethylene since it has flexibility, weather resistance and chlorine resistance.

As the polyethylene, usable are low-density polyethylene (LDPE), linear low-density polyethylene (LLDPE), very-low-density polyethylene (VLDPE), middle-density polyethylene (MDPE), high-density polyethylene (HDPE), etc. From the viewpoint of flexibility, preferred is low-density polyethylene.

As the copolymer, usable is a copolymer of ethylene or propylene with a monomer copolymerizable therewith. Examples of the monomer copolymerizable with ethylene or propylene include $\alpha$-olefins, styrenes, dienes, cyclic compounds, oxygen atom-containing compounds, etc.

The $\alpha$-olefins include 1-butene, 3-methyl-1-butene, 3-methyl-1-pentene, 4-methyl-1-pentene, 1-pentene, 1-hexene, 1-heptene, 1-octene, 1-decene, 1-tetradecene, 1-hexadecene, 1-octadecene, 1-eicosene, etc. The styrenes include styrene, 4-methylstyrene, 4-dimethylaminostyrene, etc. The dienes include 1,3-butadiene, 1,5-hexadiene, 1,4-hexadiene, 1,7-octadiene, etc. The cyclic compounds include norbornene, cyclopentene, etc. The oxygen atom-containing compounds include hexenol, hexenoic acid, methyl octenoate, etc. These copolymerizable monomers may be used singly, or two or more thereof may be used in combination. Also employable is a copolymer of ethylene and propylene.

The copolymer may be any of an alternate copolymer, a random copolymer, or a block copolymer.

The polyolefin resin may include a modified polyolefin resin modified with a small amount of a carboxyl group-containing monomer such as acrylic acid, maleic acid, methacrylic acid, maleic anhydride, fumaric acid, itaconic acid, etc. The modification is generally carried out by copolymerization or graft-modification.

[Polyamide Resin Composition Layer (B)]

The polyamide resin composition layer (B) is a layer containing a specific polyamide resin composition as the main component. The polyamide resin composition constituting the layer (B) contains a polyamide resin (b-1) in which a diamine constituent unit contains a constituent unit derived from a xylylenediamine and a dicarboxylic acid constituent unit contains a constituent unit derived from an $\alpha,\omega$-linear aliphatic dicarboxylic acid having from 4 to 20 carbon atoms, and a modified polyolefin (b-2).

The multilayer structure of the present invention includes the above-mentioned polyamide resin composition layer (B), and can therefore exhibit excellent fuel barrier properties not detracting from the flexibility of the polyolefin layer (A).

<Polyamide Resin (b-1)>

In the polyamide resin (b-1) for use in the present invention, the diamine constituent unit contains a constituent unit derived from a xylylenediamine, and the dicarboxylic acid constituent unit contains a constituent unit derived from an $\alpha,\omega$-linear aliphatic dicarboxylic acid having from 4 to 20 carbon atoms. Since the diamine constituent unit contains a constituent unit derived from a xylylenediamine, the resin has a high modulus of elasticity and is excellent in stiffness.

(Diamine Structural Unit)

The diamine constituent unit constituting the polyamide resin (b-1) contains a constituent unit derived from a xylylenediamine. The content of the xylylenediamine-derived constituent unit in the diamine constituent unit in the polyamide resin (b-1) is preferably from 70 to 100 mol%, more preferably from 80 to 100 mol%, even more preferably from 90 to 100 mol%.

As the xylylenediamine, preferred is metaxylylenediamine, paraxylylenediamine or a mixture thereof from the viewpoint of the molding processability with polyolefin, and more preferred is metaxylylenediamine, or a mixture of metaxylylenediamine and paraxylylenediamine.

In the case where the xylylenediamine is derived from metaxylylenediamine, the polyamide to be obtained can be excellent in flexibility, crystallinity, melt moldability, molding processability and toughness.

In the case where the xylylenediamine is derived from a mixture of metaxylylenediamine and paraxylylenediamine, the polyamide to be obtained can be excellent in flexibility, crystallinity, melt moldability, molding processability and toughness, and further shows high heat resistance and a high modulus of elasticity. In addition, since the melting point of the polyamide to be obtained is close to the melting point of a polyolefin, the processing temperature of the polyamide can be close to the processing temperature of a polyolefin. Consequently, the multilayer structure including the polyolefin layer (A) and the polyamide resin composition layer (B) can be produced efficiently.

In the case where a mixture of metaxylylenediamine and paraxylylenediamine is used as the xylylenediamine, the proportion of paraxylylenediamine to the total amount of metaxylylenediamine and paraxylylenediamine is preferably 90 mol% or less, more preferably 80 mol% or less, even more preferably 70 mol% or less, still more preferably from 5 to 70 mol%. When the proportion of paraxylylenediamine falls within the above-mentioned range, it is preferred since the melting point of the polyamide to be obtained is not close to the decomposition temperature of the polyamide.

As described above, the diamine constituent unit constituting the polyamide resin (b-1) contains a constituent unit derived from a xylylenediamine, but may contain a constituent unit derived from any other diamine compound within a range not detracting from the effects of the present invention.

Examples of the diamine compound that can constitute the diamine constituent unit other than xylylenediamine include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, 2,4,4-trimethylhexamethylenediamine, etc.; alicyclic diamines such as 1,3-bis(aminomethyl)cyclohexane, 1,4-bis(aminomethyl)cyclohexane, 1,3-diaminocyclohexane, 1,4; diaminocyclohexane, bis(4-aminocyclohexyl)methane, 2,2-bis(4-aminocyclohexyl)propane, bis(aminomethyl)decalin, bis(aminomethyl)tricyclodecane, etc.; aromatic ring-having diamines such as bis(4-aminophenyl) ether, paraphenylenediamine, bis(aminomethyl)naphthalene, etc., but the diamine compound is not limited thereto.

(Dicarboxylic Acid Structural Unit)

The dicarboxylic acid constituent unit constituting the polyamide resin (b-1) contains a constituent unit derived from an $\alpha,\omega$-linear aliphatic dicarboxylic acid having from 4 to 20 carbon atoms. The content of the $\alpha,\omega$-linear aliphatic dicarboxylic acid having from 4 to 20 carbon atoms in the dicarboxylic acid constituent unit in the polyamide resin (b-1) is preferably from 70 to 100 mol%, more preferably from 80 to 100 mol%, even more preferably from 90 to 100 mol%.

Examples of the $\alpha,\omega$-linear aliphatic dicarboxylic acid having from 4 to 20 carbon atoms include succinic acid, glutaric acid, adipic acid, pimelic acid, suberic acid, azelaic acid, sebacic acid, 1,10-decanedicarboxylic acid, 1,11-undecanedicarboxylic acid, 1,12-dodecanedicarboxylic acid, etc. Of those, preferred is at least one selected from adipic acid and sebacic acid, from the viewpoint of crystallinity and high elasticity, and more preferred is sebacic acid from the viewpoint of modulus of elasticity, hydrolysis resistance and moldability. One alone or two or more of these dicarboxylic acids may be used either singly or as combined.

As described above, the dicarboxylic acid constituent unit constituting the polyamide resin (b-1) contains a constituent unit derived from an $\alpha,\omega$-linear aliphatic dicarboxylic acid having from 4 to 20 carbon atoms, but may contain a constituent unit derived from any other dicarboxylic acid, within a range not detracting from the effects of the present invention.

Examples of the dicarboxylic acid that can constitute a dicarboxylic acid constituent unit other than the $\alpha,\omega$-linear aliphatic dicarboxylic acid having from 4 to 20 carbon atoms include aliphatic dicarboxylic acids such as oxalic acid, malonic acid, etc.; aromatic dicarboxylic acids such as terephthalic acid, isophthalic acid, 2,6-naphthalenedicarboxylic acid, etc., however, the acid is not limited thereto.

As the polyamide resin (b-1), preferred is a polyamide in which the diamine constituent unit contains a constituent unit derived from metaxylylenediamine and the dicarboxylic acid constituent unit contains a constituent unit derived from sebacic acid, from the viewpoint of modulus of elasticity, stiffness, hydrolysis resistance, molding processability with polyolefin, etc.

(Physical Properties of Polyamide Resin (b-1))

The relative viscosity of the polyamide resin (b-1) is preferably within a range of from 1.1 to 3.0, from the viewpoint of moldability and melt miscibility with the modified polyolefin (b-2), more preferably within a range of from 1.1 to 2.9, even more preferably within a range of from 1.1 to 2.8. The relative viscosity is a ratio of a fall time (t) obtained by dissolving 0.2 g of a sample in 20 mL of 96% by mass sulfuric acid and measuring the resulting solution at 25°C by a Cannon-Fenske viscometer to a fall time ($t_0$) of the 96% by mass sulfuric acid itself as similarly measured, and is expressed according to the following equation.

$$\text{Relative Viscosity} = t/t_0$$

The melting point of the polyamide resin (b-1) is, from the viewpoint of heat resistance and melt moldability, preferably within a range of from 170 to 270°C, more preferably within a range of from 175 to 270°C, even more preferably within a range of from 180 to 270°C, still more preferably within a range of from 180 to 260°C. The melting point is measured using a differential scanning calorimeter.

The number-average molecular weight (Mn) of the polyamide resin (b-1) is, from the viewpoint of moldability and melt miscibility with the modified polyolefin resin (b-2), preferably from 1,000 to 50,000, more preferably from 3,000 to 30,000, even more preferably from 5,000 to 25,000, still more preferably from 7,000 to 22,000. The number-average molecular weight (Mn) of the polyamide resin (b-1) means the value measured according to the method described in Examples.

(Production of Polyamide Resin (b-1))

Production of the polyamide resin (b-1) is not specifically limited, and can be carried out in any method and polymerization condition. For example, according to a method which includes heating a salt containing a diamine component (a diamine such as a xylylenediamine, etc.) and a dicarboxylic acid component (a dicarboxylic acid such as an $\alpha,\omega$-linear aliphatic dicarboxylic acid having from 4 to 20 carbon atoms, etc.) under pressure in the presence of water, and, while removing the added water and the condensation water, polymerizing the components in a molten state, the polyamide resin (b-1) may be produced. According to a method which includes directly adding a diamine component (a diamine such as a xylylenediamine, etc.) to a dicarboxylic acid component (a dicarboxylic acid such as an $\alpha,\omega$-linear aliphatic dicarboxylic acid having from 4 to 20 carbon atoms, etc.) being in a molten state and polycondensing them under normal pressure, the polyamide resin (b-1) may also be produced. In this case, for the purpose of keeping the reaction system in a uniform liquid state, a diamine component is continuously added to a dicarboxylic acid component, and the polycondensation is carried out while heating the reaction system such that the reaction temperature could not be lower than the melting point of the oligoamide and the polyamide being produced.

<Modified Polyolefin (b-2)>

The modified polyolefin (b-2) is preferably a polyolefin modified with a carboxyl group-containing monomer or a polyolefin graft-modified with a polyamide.

As the polyolefin, there are mentioned the polyolefins described for the above-mentioned polyolefin layer (A), and among the polyolefins, from the viewpoint of exhibiting flexibility, weather resistance and chlorine resistance, polyethylene is preferred, and from the viewpoint of fuel odor barrier properties, high-density polyethylene (HDPE) is more preferred.

As the carboxyl group-containing monomer, preferred is a carboxylic acid compound such as a carboxylic acid or an anhydride thereof, etc. Specific examples of the compound include acrylic acid, maleic acid, methacrylic acid, maleic anhydride, fumaric acid, itaconic acid, etc. Above all, from the viewpoint of melt miscibility with the polyamide resin (b-1), preferred is maleic anhydride.

The polyolefin modified with a carboxylic group-containing monomer includes an acid-modified polyolefin as typified by a maleic anhydride-modified polyethylene. The polyolefin modified with a carboxyl group-containing monomer may be an ionomer. The method for modifying a polyolefin with a carboxyl group-containing monomer is not specifically limited, and any method is applicable thereto.

The polyolefin graft-modified with a polyamide may be obtained by adding a polyamide to the above-mentioned polyolefin modified with a carboxyl group-containing monomer. The polyamide for graft formation includes a condensation product of the following (a) and (b).

(a) One or plural $\alpha,\omega$-amino acids such as aminocaproic acid, 7-aminoheptanoic acid, 11-aminoundecanoic acid and 12-aminododecanoic acid, or one or plural lactams such as caprolactam, enantholactam and laurolactam, etc.;
(b) One or plural salts or mixtures of a diamine such as hexamethylenediamine, dodecamethylenediamine, metaxylylenediamine, bis(p-aminocyclohexyl)methane, trimethylhexamethylenediamine, etc., and a dicarboxylic acid such as isophthalic acid, terephthalic acid, adipic acid, azelaic acid, suberic acid, sebacic acid, dodecanedicarboxylic acid, etc.

Above all, as the polyamide for graft formation, preferred is an aliphatic polyamide from the viewpoint of modulus of elasticity, more preferred is at least one selected from the group consisting of nylon 6 (polycaproamide), nylon 66 (polyhexamethyleneadipamide), nylon 11 (polyundecanamide), nylon 12 (polydodecanamide), nylon 612 (polyhexamethylenedodecanamide) and copolymers thereof, and even more preferred is nylon 6.

As the polyolefin graft-modified with such a polyamide, commercial products such as "Apolhya", a trade name by Arkema K.K., etc. are available.

As the modified polyolefin (b-2), preferred is a maleic anhydride-modified polyethylene or a polyolefin graft-modified with at least one polyamide selected from the group consisting of nylon 6, nylon 66, nylon 11, nylon 12, nylon 612 and copolymers thereof.

The density of the modified polyolefin (b-2) is, from the viewpoint fuel odor barrier properties, preferably 0.85 $g/cm^3$ or more, more preferably 0.90 $g/cm^3$ or more, even more preferably 0.92 $g/cm^3$ or more, still more preferably 0.94 $g/cm^3$ or more. The upper limit of the density of the modified polyolefin (b-2) is not specifically limited, but is generally 0.99 $g/cm^3$ or less, preferably 0.97 $g/cm^3$ or less.

The weight-average molecular weight (Mw) of the modified polyolefin (b-2) is, from the viewpoint of molding processability, preferably from 10,000 to 150,000, more preferably from 20,000 to 120,000, even more preferably 30,000 to 100,000. The weight-average molecular weight (Mw) of the modified polyolefin (b-2) means the value measured according to the method described in Examples.

The modification is carried out generally by copolymerization or graft-modification. The degree of modification of the modified polyolefin (b-2) is, from the viewpoint of the melt miscibility of the polyamide resin (b-1) and the modified polyolefin (b-2) and the flowability of the polyamide resin composition, preferably from 0.2 to 5% by mass, more preferably from 0.3 to 3% by mass, even more preferably from 0.5 to 1.5% by mass.

<Polyamide Resin Composition>

The polyamide resin composition constituting the layer (B) contains the above-mentioned polyamide resin (b-1) and modified polyolefin (b-2).

The content of the modified polyolefin (b-2) in the polyamide resin composition is, from the viewpoint of flexibility, fuel odor barrier properties and molding processability, from 5 to 30 parts by mass relative to 100 parts by mass of the polyamide resin (b-1), preferably from 5 to 25 parts by mass, more preferably from 5 to 20 parts by mass, even more preferably from 10 to 20 parts by mass. The content of the modified polyolefin (b-2) may be suitably determined depending on the degree of modification of the modified polyolefin (b-2).

The polyamide resin composition for use in the present invention may contain additives, within a range not detracting from the effects of the present invention. The additives include a filler, a stabilizer, a colorant, a ultraviolet absorbent, a photostabilizer, an antioxidant, an antistatic agent, a flame retarder, a crystallization accelerator, a fibrous reinforcing agent, a plasticizer, a lubricant, a heat-resistant, a delusterant, a nucleating agent, a discoloration inhibitor, a gelling inhibitor, etc., but the additives are not limited thereto.

In addition, the polyamide resin composition for use in the present invention may contain any thermoplastic resin such as a polyester resin, an acrylic resin or the like, within a range not detracting from the effects of the present invention. Further, the composition may also contain any other polyamide resin than the polyamide resin (b-1).

The polyester resin includes a polyethylene terephthalate resin, a polyethylene terephthalate-isophthalate copolymer resin, a polyethylene-1,4-cyclohexanedimethylene-terephthalate copolymer resin, a polyethylene-2,6-naphthalene dicarboxylate resin, a polyethylene-2,6-naphthalene dicarboxylate-terephthalate copolymer resin, a polyethylene-terephthalate-4,4'-biphenyldicarboxylate copolymer resin, a poly-1,3-propylene-terephthalate resin, a polybutylene terephthalate resin, a polybutylene-2,6-naphthalene dicarboxylate resin, etc. Preferred polyester resins include a polyethylene terephthalate resin, a polyethylene terephthalate-isophthalate copolymer resin, a polybutylene terephthalate resin and a polyethylene-2,6-naphthalene dicarboxylate resin.

The acrylic resin includes a homopolymer of a (meth)acrylate, a copolymer of two or more different (meth)acrylate monomers, or a copolymer of a (meth)acrylate and any other monomer. Specifically, there are mentioned (meth)acrylic resins of a homopolymer or a copolymer containing a (meth)acrylate, such as polymethyl (meth)acrylate, polyethyl (meth)acrylate, polypropyl (meth)acrylate, polybutyl (meth)acrylate, methyl (meth)acrylate-butyl (meth)acrylate copolymer, ethyl (meth)acrylate-butyl (meth)acrylate copolymer, ethylene-methyl (meth)acrylate copolymer, styrene-methyl (meth)acrylate copolymer, etc..

The other polyamide resin than the polyamide resin (b-1) includes polycaproamide (nylon 6), polyundecanamide (nylon 11), polydodecanamide (nylon 12), polytetramethyleneadipamide (nylon 46), polyhexamethyleneadipamide (nylon 66), polyhexamethyleneazelamide (nylon 69), polyhexamethylenesebacamide (nylon 610), polyundecamethyleneadipamide (nylon 116), polyhexamethylenedodecanamide (nylon 612), polyhexamethyleneterephthalamide (nylon 6T (T represents a terephthalic acid component unit; the same shall apply hereinunder), polyhexamethylene isophthalamide (nylon 6I (I represents an isophthalic acid component unit; the same shall apply hereinunder), polyhexamethylene terephthalisophthalamide (nylon 6TI), polynonamethylene terephthalamide (nylon 9T), polyamide resin obtained by polycondensation of 1,3- or 1,4-bis(aminomethyl)cyclohexane and adipic acid (nylon 1,3-/1,4-BAC6 (BAC represents a bis(aminomethyl)cyclohexane component unit)), and copolyamides thereof, etc.

(Production of Polyamide Resin Composition)

The polyamide resin composition for use in the present invention can be obtained by melt-kneading the above-mentioned polyamide resin (b-1) and the modified polyolefin (b-2).

Regarding the method of melt-kneading the polyamide resin composition, there may be mentioned a melt-kneading method using various types of extruders normally employed such as a single-screw or twin-screw extruder or the like, etc. Of those, preferred is a method of using a twin-screw extruder from the viewpoint of productivity, general versatility, etc. In that case, the melt-kneading temperature is preferably set within a range of from the melting points of the polyamide resin (b-1) and the modified polyolefin (b-2) to a temperature higher by 60°C than any higher temperature of the melting point of the polyamide resin (b-1) and the melting point of the modified polyolefin (b-2), and more preferably within a range of a temperature higher by 10°C than the melting points of the polyamide resin (b-1) and the modified polyolefin (b-2) to a temperature higher by 40°C than any higher temperature of the melting point of the polyamide resin (b-1) and the melting point of the modified polyolefin (b-2). When the melt-kneading temperature is set to be not lower than the melting points of the polyamide resin (b-1) and the modified polyolefin (b-2), the polyamide resin (b-1) and the modified polyolefin (b-2) can be prevented from solidifying, and when the temperature is set to be not higher than a temperature higher by 60°C than any higher temperature of the melting point of the polyamide resin (b-1) and the melting point of the modified polyolefin (b-2), the polyamide resin (b-1) and the modified polyolefin (b-2) can be prevented from being thermally degraded.

Preferably, the retention time in melt-kneading is controlled to fall within a range of from 1 to 10 minutes, more preferably within a range of from 2 to 7 minutes. When the retention time is 1 minute or longer, the polyamide resin (b-1) and the modified polyolefin (b-2) can be sufficiently dispersed, and when the retention time is 10 minutes or shorter, the polyamide resin (b-1) and the modified polyolefin (b-2) can be prevented from being thermally degraded.

Preferably, the screw of the twin-screw extruder has an inverse screw element part and/or a kneading disc part in at least one site, and the polyamide resin composition is melt-kneaded while partly kept remaining in the part.

After melt-kneaded, the polyamide resin composition may be directly coextruded and molded along with the polyolefin layer (A) to obtain a multilayer structure, or after once formed into pellets, the pellets may be subjected anew to extrusion molding, injection molding or the like to produce a multilayer structure with the polyolefin layer (A).

In the case where an additive is added to the polyamide resin composition, the additive may be simultaneously kneaded while the polyamide (b-1) and the modified polyolefin (b-2) are melt-kneaded.

[Layer Configuration and Molding Method]

The multilayer structure of the present invention can include one or two or more of each of the polyolefin layer (A) (hereinafter sometimes abbreviated as "layer (A)") and the polyamide resin composition layer (B) (hereinafter sometimes abbreviated as "layer (B)"). Specifically, the following layer configurations are exemplified, and a layer configuration prepared through coextrusion from a multilayer die by using an extruder is preferred.

(1) Two-type two-layer configuration; specifically, layer (A)/layer (B), layer (B)/layer (A), etc.
(2) Two-type three-layer configuration; specifically, layer (A)/layer (B)/layer (A), layer (B)/layer (A)/layer (B), etc.
(3) Two-type four-layer configuration; specifically, layer (A)/layer (B)/layer (A)/layer (B), layer (B)/layer (A)/layer (B)/layer (A), etc.

Incidentally, in this specification, the multilayer structure is a cylindrical molded body, and, for example, the expression of X/Y/Z means that X, Y, and Z are laminated in this order from the inside unless otherwise indicated. In addition, in the case where the multilayer structure includes a plurality of the layers (A), the plural layers (A) may be the same as or different from each other. The same is also applicable to the layers (B).

In addition, the multilayer structure of the present invention is a cylindrical molded body in view of the characteristics thereof. The cylindrical molded body is one having a cylindrical shape and having a cavity in the inside thereof, for example, a pipe, a hose, a tube, etc., in which a liquid or a gas can be moved from one side to the other side in the cavity part.

The multilayer structure is a cylindrical molded body, and the structure includes preferably at least a layer configuration in an order of layer (A) and a layer (B) from the cavity part of the cylindrical molded body, that is, from the inside thereof, from the viewpoint of fuel barrier properties, weather resistance, chlorine resistance, etc.

As for the layer configuration, a preferred embodiment may be chosen according to an application of the cylindrical molded body; however, the two-type two-layer configuration of layer (A)/layer (B) and the two-type three-layer configuration of layer (A)/layer (B)/layer (A) from the inside are more preferred from the viewpoint of a balance between flexibility and fuel barrier properties as well as economy.

The thickness of the cylindrical molded body may be properly specified according to the intended purpose.

The thickness of the polyamide resin composition layer (B) is preferably 10 $\mu$m or more, more preferably 30 $\mu$m or more, even more preferably 50 $\mu$m or more. When the thickness of the polyamide resin composition layer (B) is 10 $\mu$m or more, the effect of fuel barrier properties can be favorably exhibited.

The ratio of the thickness of the polyamide resin composition layer (B) to the thickness of the cylindrical molded body is from 0.005 to 0.5, preferably from 0.008 to 0.2, more preferably from 0.01 to 0.1. When the thickness of the polyamide resin composition layer (B) to the thickness of the cylindrical molded body is 0.005 or more, sufficient fuel barrier properties can be exhibited, and when it is 0.5 or less, the balance between flexibility and fuel barrier properties is excellent and the moldability in producing the cylindrical molded body is also excellent.

The method for molding the cylindrical molded body is not specifically limited, and the cylindrical molded body can be produced by adopting a known technology. For example, the cylindrical molded body may be produced by melt-kneading the respective resins for every resin constituting each layer and feeding the respective molten resins into a multilayer tube extrusion molding machine equipped with a die capable of molding in a multilayer structure, followed by molding according to the customary method. In addition, the cylindrical molded body may be produced in such a manner that after previously molding an internal layer composed of the polyolefin layer (A) in a prescribed shape, the layer is coated with the polyamide resin composition melted from a cross-head die or the like for forming the polyamide resin composition layer (B), thereby forming a configuration of layer (A)/layer (B) from the inside. Furthermore, the multilayer structure may be further coated with the polyolefin layer (A) to provide a multilayer structure of layer (A)/layer (B)/layer (A) from the inside.

In melt-kneading the polyolefin resin that is a main component of the polyolefin layer (A) and extrusion molding the polyolefin layer (A), it is preferred to set its extrusion temperature to a range of a melting point of the polyolefin resin as a main component or higher to a temperature that is higher by 150°C than the melting point of the polyolefin resin as a main component or lower; and it is more preferred to set the extrusion temperature to a temperature that is higher by 20°C than the melting point of the polyolefin resin as a main component or higher to a temperature that is higher by 120°C than the melting point of the polyolefin resin as a main component or lower. By setting the extrusion temperature to the melting point of the polyolefin resin or higher, solidification of the polyolefin resin can be suppressed, and by setting the extrusion temperature to a temperature that is higher by 150°C than the melting point of the polyolefin resin or lower, thermal deterioration of the polyolefin resin can be suppressed.

In melt-kneading the polyamide resin composition that is a main component of the polyamide resin composition layer (B) and extrusion molding the polyamide resin composition layer (B), it is preferred to set its extrusion temperature to a range of from a melting point of the polyamide resin composition as a main component or higher to a temperature that is higher by 80°C than the melting point of the polyamide resin composition as a main component or lower, and it is more preferred to set the extrusion temperature to a range of from a temperature that is higher by 10°C than the melting point of the polyamide resin composition as a main component or higher to a temperature that is higher by 60°C than the melting point of the polyamide resin composition as a main component or lower. By setting the extrusion temperature to the melting point of the polyamide resin composition or higher, solidification of the polyamide resin composition can be suppressed, and by setting the extrusion temperature to a range of a temperature that is higher by 80°C than the melting point of the polyamide resin composition or lower, thermal deterioration of the polyamide resin composition can be suppressed.

In the case of laminating the polyolefin layer (A) and the polyamide resin composition layer (B) within a multilayer tube extrusion molding machine, it is preferred to set a temperature of the resin flow channel after lamination to a range of a melting point of the polyamide resin composition or higher to a temperature that is higher by 80°C than the melting point of the polyamide resin composition as a main component or lower; and it is more preferred to set a temperature of the resin flow channel after lamination to a range of a temperature that is higher by 10°C than the melting point of the polyamide resin composition as a main component or higher to a temperature that is higher by 60°C than the melting point of the polyamide resin composition as a main component or lower. By setting the temperature of the resin flow channel after lamination to the melting point of the polyamide resin composition or higher, solidification of the polyamide resin composition can be suppressed, and by setting the temperature of the resin flow channel after lamination to a range of a temperature that is higher by 80°C than the melting point of the polyamide resin composition or lower, thermal deterioration of the polyamide resin composition can be suppressed.

Furthermore, with respect to the multilayer structure of the present invention, an extrusion moldable resin layer can be provided for the purpose of giving properties according to the need without hindering the effects of the present invention, besides the polyolefin layer (A) and the polyamide resin composition layer (B) as described above.

Examples of the above-described resin layer include those formed of a thermoplastic resin, such as a maleic anhydride-modified polyolefin resin, a fluorine resin, a polyimide resin, a polyamide resin, a polyester resin, a polystyrene resin, a vinyl chloride resin, etc.

In addition, the polyolefin layer (A) and the polyamide resin composition layer (B) as described above, each constituting the multilayer structure of the present invention, and the above-described resin layer which can be provided as the need arises, may contain an additive within the range where the effects of the present invention are not hindered.

Examples of the additive include a filler, a stabilizer, a colorant, an ultraviolet absorber, a photostabilizer, an antioxidant, an antistatic agent, a flame retarder, a crystallization accelerator, a fibrous reinforcing agent, a plasticizer, a lubricant, a heat-resistant agent, and the like. However, it should not be construed that the additive is limited thereto. In addition, as for a content of the additive, the additive may be used within the range of a usual content according to the type thereof.

In the case of laminating in the configuration of layer (A)/layer (B)/layer (A') from the inside, the type and amount of the additive to be added in the layer (A) in the inside, the layer (B) in the middle, and the layer (A') in the outside may be different from each other. For example, by changing a combination of the colorant in the layer (A) in the inside with that in the layer (A') in the outside, it is also possible to make a distinction from other resin tube easy.

The multilayer structure of the present invention includes the polyolefin layer (A) and the polyamide resin composition layer (B) as described above and has excellent properties in terms of flexibility and fuel barrier properties without hindering light weight and excellent flexibility as in polyolefin-made products. For that reason, even if the above-described multilayer structure is wound around a winding core and conveyed, it does not cause a defective appearance, such as creases, etc., and is convenient for a piping work to be carried out upon bending in a desired way. In addition, the multilayer structure of the present invention is suitable for water service piping not requiring a covering material for preventing a fuel, such as kerosene, etc., from penetration, especially for water service piping for water supply.

Examples

The present invention is described in more detail with reference to Examples hereinunder, but the present invention is not limited thereto. In those Examples, various measurements were carried out according to the following methods.

(1) Relative Viscosity ($\eta r$)

0.2 g of a sample was accurately weighed and dissolved in 20 mL of 96 % by mass sulfuric acid at 20 to 30°C with stirring to achieve complete dissolution, thereby preparing a solution. Thereafter, 5 mL of the solution was rapidly taken into a Cannon-Fenske viscometer, allowed to stand in a thermostat at 25°C for 10 minutes, and then measured for a fall time (t). In addition, a fall time (to) of the 96 % by mass sulfuric acid itself was similarly measured. A relative viscosity was calculated from t and to according to the following equation.

$$\text{Relative Viscosity} = t/t_0$$

(2) Number-Average Molecular Weight (Mn)

(a) Amino Terminal Group Concentration ([NH$_2$] ($\mu$eq/g)

0.5 g of the polyamide resin was accurately weighed, and the polyamide was dissolved in 30 mL of a solution of phenol/ethanol = 4/1 by volume with stirring. After the polyamide resin was completely dissolved, the concentration was determined through neutralization titration with N/100 hydrochloric acid.

(b) Carboxyl Terminal Group Concentration ([COOH] $\mu$eq/g)

0.5 g of the polyamide resin was accurately weighed, and the polyamide was dissolved in 30 mL of benzyl alcohol with stirring in a nitrogen stream atmosphere at 160 to 180°C. After the polyamide resin was completely dissolved, the solution was cooled down to 80°C in the nitrogen stream atmosphere, and with stirring, 10 mL of methanol was added thereto, and the concentration was determined through neutralization titration with N/100 sodium hydroxide aqueous solution.

The number-average molecular weight of the polyamide resin was obtained from the found data of the amino terminal group concentration and the carboxyl terminal group concentration according to the following equation.

$$\text{Number-average molecular weight} = 2 \times 1{,}000{,}000/([NH_2] + [COOH])$$

[NH$_2$]: Terminal amino group concentration ($\mu$eq/g)
[COOH]: Terminal carboxyl group concentration ($\mu$eq/g)

(3) Weight-Average Molecular Weight (Mw) of Modified Polyolefin

The weight-average molecular weight (Mw) of the modified polyolefin was measured, using "GPC/V2000" manufactured by Waters Corporation. The measurement was carried out through GPC in an atmosphere at 145°C, using o-dichlorobenzene as an eluent. The weight-average molecular weight (Mw) of the modified polyolefin was determined through correction with the calibration curve obtained as a result of measurement of a standard polystyrene that had been measured separately.

(4) Degree of Modification with Maleic Anhydride of Modified Polyolefin Resin (% by mass)

The degree of modification with maleic anhydride of the modified polyolefin resin was measured through neutralization titration according to JIS K0070. One g of the maleic anhydride-modified polyolefin was accurately weighed, and dissolved in 100 mL of xylene with stirring at about 120°C. After this was completely dissolved, a phenolphthalein solution was added thereto. The resulting solution was subjected to neutralization titration using a 0.1 mol/L potassium hydroxide/ethanol solution in which the concentration had been previously measured accurately. From the titration amount (T) [ml] of the 0.1 mol/L potassium hydroxide-ethanol solution, the factor (f) of the 0.1 mol/L potassium hydroxide-ethanol solution, 1/10 of the formula weight of potassium hydroxide 56.11 (5.611), and the mass (S) [g] of the maleic anhydride-modified polyolefin, the acid value [mg/g] was calculated according to the following equation (1).

$$\text{Acid Value} = T \times f \times 5.611/S \qquad (1)$$

From the resultant acid value, the degree of modification with maleic anhydride (% by mass) was calculated.

(5) Measurement of Differential Scanning Calorimetry (glass transition temperature, crystallization temperature, and melting point)

The measurement of the differential scanning calorimetry was carried out in conformity with JIS K7121 and K7122. By using a differential scanning calorimeter (trade name: "DSC-60", manufactured by Shimadzu Corporation), each sample was charged in a DSC measurement pan and subjected to a pretreatment of raising the temperature to 300°C in a nitrogen atmosphere at a temperature rise rate of 10°C/min and rapid cooling, followed by performing the measurement. As for the measurement condition, the temperature was raised at a rate of 10°C/min, and after keeping at 300°C for 5 minutes, the temperature was dropped to 100°C at a rate of -5°C/min, thereby determining the glass transition temperature Tg, the crystallization temperature Tch, and the melting point Tm.

(6) Flexibility

The cylindrical molded body obtained in Examples and Comparative Examples was wound around a winding core having a diameter of 600 mm, and left at 23°C for 24 hours. Afterwards, the cylindrical molded body was unwound from the winding core, and visually checked for the presence of absence of wrinkles.

(7) Oil Odor (fuel barrier properties)

The cylindrical molded body obtained in Examples and Comparative Examples was wound around a winding core having a diameter of 600 mm, and fixed in a container filled with kerosene in such a manner that the half circumference thereof could be immersed in the kerosene therein, and left as such at 23°C for 1 week. Afterwards, while kept immersed in kerosene, the cylindrical molded body was filled with tap water and left as such for further 24 hours, and then tap water was discharged out, and the thus-discharged tap water was checked for the presence or absence of kerosene odor.

Production Example 1

(Production of Polyamide Resin b1-1)

In a reaction vessel having a capacity of about 3 L and equipped with a stirrer, a nitrogen gas inlet, and a condensed water discharge port, 800 g of sebacic acid, 0.613 g of sodium hypophosphite monohydrate, and 0.427 g of sodium acetate were charged, and after thoroughly purging the inside of the vessel with nitrogen, the added components were melted at 170°C while feeding a nitrogen gas at a rate of 20 mL/min into the vessel. 536 g of metaxylylenediamine (MXDA) (manufactured by Mitsubishi Gas Chemical Company, Inc.) was added dropwise thereto while gradually heating the vessel up to 230°C, and the mixture was polymerized for about 2 hours, thereby obtaining a polyamide resin b1-1. $\eta r = 2.3$, [COOH] = 65.5 $\mu$eq/g, [NH$_2$] = 37.8 $\mu$eq/g, Mn = 19,361, Tg = 60.0°C, Tch = 119.3°C, Tm = 191.3°C.

Production Example 2

(Production of Polyamide Resin b1-2)

In a reaction vessel having a capacity of about 3 L and equipped with a stirrer, a nitrogen gas inlet, and a condensed water discharge port, 800 g of sebacic acid, 0.613 g of sodium hypophosphite monohydrate, and 0.427 g of sodium acetate were charged, and after thoroughly purging the inside of the vessel with nitrogen, the added components were melted at 170°C while feeding a nitrogen gas at a rate of 20 mL/min into the vessel. A mixture of 375 g of metaxylylenediamine (MXDA) (manufactured by Mitsubishi Gas Chemical Company, Inc.) and 161 g of paraxylylenediamine (PXDA) (manufactured by Mitsubishi Gas Chemical Company, Inc.) (molar ratio (MXDA/PXDA = 70/30)) was added dropwise thereto while gradually heating the vessel up to 250°C, and the mixture was polymerized for about 2 hours, thereby obtaining a polyamide resin b1-2. $\eta r = 2.2$, [COOH] = 81.8 $\mu$eq/g, [NH$_2$] = 26.9 $\mu$eq/g, Mn = 18,399, Tg = 64.2°C, Tch = 104.2°C, Tm = 212.0°C.

Production Example 3

(Production of Polyamide Resin b1-3)

In a reaction vessel having a capacity of about 3 L and equipped with a stirrer, a nitrogen gas inlet, and a condensed water discharge port, 730.8 g of adipic acid, 0.6322 g of sodium hypophosphite monohydrate, and 0.4404 g of sodium acetate were charged, and after thoroughly purging the inside of the vessel with nitrogen, the added components were melted at 170°C while feeding a nitrogen gas at a rate of 20 mL/min into the vessel. 681.0 g of metaxylylenediamine (MXDA) (manufactured by Mitsubishi Gas Chemical Company, Inc.) was added dropwise thereto while gradually heating the vessel up to 250°C, and the mixture was polymerized for about 2 hours, thereby obtaining a polyamide resin b1-3. $\eta r = 2.1$, [COOH] = 98.3 $\mu$eq/g, [NH$_2$] = 31.4 $\mu$eq/g, Mn = 15,420, Tg = 87.9°C, Tch = 155°C, Tm = 237.4°C.

Production Example 4

(Production of Polyamide Resin b1-4)

In a reaction vessel having a capacity of about 3 L and equipped with a stirrer, a nitrogen gas inlet, and a condensed water discharge port, 731 g of adipic acid, 0.632 g of sodium hypophosphite monohydrate, and 0.440 g of sodium acetate were charged, and after thoroughly purging the inside of the vessel with nitrogen, the added components were melted at 170°C while feeding a nitrogen gas at a rate of 20 mL/min into the vessel. A mixture of 476.7 g of metaxylylenediamine (MXDA) (manufactured by Mitsubishi Gas Chemical Company, Inc.) and 204.3 g of paraxylylenediamine (PXDA) (manufactured by Mitsubishi Gas Chemical Company, Inc.) (molar ratio (MXDA/PXDA = 70/30)) was added dropwise thereto while gradually heating the vessel up to 275°C, and the mixture was polymerized for about 2 hours, thereby obtaining a polyamide resin b1-4. $\eta r$ = 2.07, [COOH] = 55.70 $\mu$eq/g, [NH$_2$] = 64.58 $\mu$eq/g, Mn = 16,623, Tg = 89.0°C, Tch = 135.0°C, Tm = 257.0°C.

Production Example 5

(Production of Polyamide Resin Composition B-1)

The polyamide resin b1-1 produced in Production Example 1 and a modified polyolefin b2-1 were dry-blended in a compounding ratio of 11 parts by mass of the modified polyolefin b2-1 relative to 100 parts by mass of the polyamide resin b1-1, then melt-kneaded in a twin-screw extruder having a kneading zone with a kneading disc, having a screw with a diameter of 28 mm and equipped with a vacuum vent and a strand die, at a cylinder temperature of 280°C to obtain a polyamide resin composition B-1.

The modified polyolefin b2-1 is "AMPLIFY GR204" manufactured by Dow Chemical Company, and according to the catalogue of Dow Chemical Company, this is a maleic anhydride-modified high-density polyethylene having a density of 0.954 g/cm$^3$. The degree of modification with maleic anhydride was 1% by mass, and as a result of measurement of the weight-average molecular weight Mw, Mw = 76,100.

Production Example 6

(Production of Polyamide Resin Composition B-2)

A polyamide resin composition B-2 was obtained in the same manner as in Production Example 5, except that the modified polyolefin b2-1 was changed to a modified polyolefin b2-2.

The modified polyolefin b2-2 is "FUSABOND E265" manufactured by Du Pont Kabushiki Kaisha, and according to the catalogue of Du Pont Kabushiki Kaisha, this is an acid anhydride-modified high-density polyethylene having a density of 0.95 g/cm$^3$. The degree of modification with maleic anhydride was 1% by mass, and as a result of measurement of the weight-average molecular weight Mw, Mw = 119,000.

Production Example 7

(Production of Polyamide Resin Composition B-3)

A polyamide resin composition B-3 was obtained in the same manner as in Production Example 5, except that the modified polyolefin b2-1 was changed to a modified polyolefin b2-3.

The modified polyolefin b2-3 is "Adtex L6100M" manufactured by Japan Polyethylene Corporation, and according to the catalogue of Japan Polyethylene Corporation, this is an acid anhydride-modified high-density polyethylene having a density of 0.92 g/cm$^3$. The degree of modification with maleic anhydride was 0.8% by mass.

Production Example 8

(Production of Polyamide Resin Composition B-4)

A polyamide resin composition B-4 was obtained in the same manner as in Production Example 5, except that the modified polyolefin b2-1 was changed to a modified polyolefin b2-4 and the compounding ratio of the polyamide resin b1-1 and the modified polyolefin b2-4 was changed to such that the amount of the modified polyolefin b2-4 was 5 parts by mass relative to 100 parts by mass of the polyamide resin b1-1.

The modified polyolefin b2-4 is "FUSABOND N498" manufactured by Du Pont Kabushiki Kaisha, and according to the catalogue of Du Pont Kabushiki Kaisha, this is an acid anhydride-modified high-density polyethylene having a density of 0.86 g/cm$^3$. The degree of modification with maleic anhydride was 0.5% by mass.

Production Example 9

(Production of Polyamide Resin Composition B-5)

A polyamide resin composition B-5 was obtained in the same manner as in Production Example 8, except that the compounding ratio of the polyamide resin b1-1 and the modified polyolefin b2-4 was changed to such that the amount of the modified polyolefin b2-4 was 11 parts by mass relative to 100 parts by mass of the polyamide resin b1-1.

Production Example 10

(Production of Polyamide Resin Composition B-6)

A polyamide resin composition B-6 was obtained in the same manner as in Production Example 8, except that the compounding ratio of the polyamide resin b1-1 and the modified polyolefin b2-4 was changed to such that the amount of the modified polyolefin b2-4 was 25 parts by mass relative to 100 parts by mass of the polyamide resin b1-1.

Production Example 11

(Production of Polyamide Resin Composition B-7)

The polyamide resin b1-2 produced in Production Example 2 and the modified polyolefin b2-2 were dry-blended in a compounding ratio of 11 parts by mass of the modified polyolefin b2-2 relative to 100 parts by mass of the polyamide resin b1-2, then melt-kneaded in a twin-screw extruder having a kneading zone with a kneading disc, having a screw with a diameter of 28 mm and equipped with a vacuum vent and a strand die, at a cylinder temperature of 280°C to obtain a polyamide resin composition B-7.

Production Example 12

(Production of Polyamide Resin Composition B-8)

The polyamide resin b1-3 produced in Production Example 3 and the modified polyolefin b2-2 were dry-blended in a compounding ratio of 11 parts by mass of the modified polyolefin b2-2 relative to 100 parts by mass of the polyamide resin b1-3, then melt-kneaded in a twin-screw extruder having a kneading zone with a kneading disc, having a screw with a diameter of 28 mm and equipped with a vacuum vent and a strand die, at a cylinder temperature of 280°C to obtain a polyamide resin composition B-8.

Production Example 13

(Production of Polyamide Resin Composition B-9)

The polyamide resin b1-4 produced in Production Example 4 and the modified polyolefin b2-1 were dry-blended in a compounding ratio of 11 parts by mass of the modified polyolefin b2-1 relative to 100 parts by mass of the polyamide resin b1-4, then melt-kneaded in a twin-screw extruder having a kneading zone with a kneading disc, having a screw with a diameter of 28 mm and equipped with a vacuum vent and a strand die, at a cylinder temperature of 280°C to obtain a polyamide resin composition B-9.

Production Example 14

(Production of Polyamide Resin Composition B-10)

A polyamide resin composition B-10 was obtained in the same manner as in Production Example 5, except that the compounding ratio of the polyamide resin b1-1 and the modified polyolefin b2-1 was changed to such that the amount of the modified polyolefin b2-1 was 3 parts by mass relative to 100 parts by mass of the polyamide resin b1-1.

Production Example 15

(Production of Polyamide Resin Composition B-11)

A polyamide resin composition B-11 was obtained in the same manner as in Production Example 5, except that the compounding ratio of the polyamide resin bl-1 and the modified polyolefin b2-1 was changed to such that the amount of the modified polyolefin b2-1 was 33 parts by mass relative to 100 parts by mass of the polyamide resin b1-1.

Production Example 16

(Production of Polyamide Resin Composition B-12)

A polyamide resin composition B-12 was obtained in the same manner as in Production Example 5, except that the modified polyolefin b2-1 was changed to a modified polyolefin b2-5.
The modified polyolefin b2-5 is "APOLHYA LP21H" manufactured by Arkema K.K., and according to the catalogue of Arkema K.K., this is a PA6 graft-modified high-density polyolefin having a density of 0.99 g/cm$^3$.

Production Example 17

(Production of Polyamide Resin Composition B-13)

A polyamide resin composition B-13 was obtained in the same manner as in Production Example 16, except that the compounding ratio of the polyamide resin b1-1 and the modified polyolefin b2-5 was changed to such that the amount of the modified polyolefin b2-5 was 25 parts by mass relative to 100 parts by mass of the polyamide resin b1-1.

Examples 1 to 11, and Comparative Examples 3 to 4

Using a polyethylene ("Novatec LL UF240" manufactured by Japan Polyethylene Corporation; according to the catalogue of Japan Polyethylene Corporation, the polyethylene has a density of 0.920 g/cm$^3$ and a melting point of 123°C) for forming a polyolefin layer (A), and a polyamide resin composition for forming a polyamide resin composition layer (B) as shown in Table 1, a cylindrical molded body was molded at a molding temperature shown in Table 1, by a multilayer tube extrusion molding machine equipped with two extruders and a flow channel for forming a two-type three-layer multilayer structure.
The thickness of cylindrical molded body was 5 mm, and had a layer configuration of layer (A)/layer (B)/layer (A) from the inside. The outer diameter of the cylindrical molded body was 30 mm, the inner diameter thereof was 20 mm, the thickness of the layer (B) was 0.2 mm, and the body was so molded that the thickness of the layer (A) in the inside and the thickness of the layer (A) in the outside could be equal.
The resultant cylindrical molded body was evaluated as described above. The results are shown in Table 1.

Comparative Example 1

Using the polyethylene ("Novatec LL UF240" manufactured by Japan Polyethylene Corporation), a cylindrical molded body was molded at the molding temperature shown in Table 1 by a single-layer tube extrusion machine equipped with one extruder.
The thickness of cylindrical molded body was so molded that its thickness could be 5 mm, its outer diameter could be 30 mm and its inner diameter could be 20 mm. The resultant cylindrical molded body was evaluated as described above. The results are shown in Table 1.

Comparative Example 2

A cylindrical molded body was molded in the same manner as in Example 1 except that the polyamide resin composition B-1 for forming the polyamide resin composition layer (B) was changed to the polyamide resin b1-1 obtained in Production Example 1, and the resultant cylindrical molded body was evaluated as described above. The results are shown in Table 1.

Table 1 (1/2)

| | | | Example | | | | | | | |
|---|---|---|---|---|---|---|---|---|---|---|
| | | | 1 | 2 | 3 | 4 | 5 | 6 | 7 | 8 |
| Polyolefin Layer (A) | | | PE | PE | PE | PE | PE | PE | PE | PE |
| Polyamide Resin Composition Layer (B) | | | B-1 | B-2 | B-3 | B-4 | B-5 | B-6 | B-7 | B-8 |
| Polyamide Resin (b-1) | | | b1-1 | b1-1 | b1-1 | b1-1 | b1-1 | b1-1 | b1-2 | b1-3 |
| Diamine (molar ratio) | xylylenediamine | | 100 | 100 | 100 | 100 | 100 | 100 | 100 | 100 |
| | MXDA:PXDA molar ratio | | 100:0 | 100:0 | 100:0 | 100:0 | 100:0 | 100:0 | 70:30 | 100:0 |
| Dicarboxylic Acid (molar ratio) | adipic acid | | 0 | 0 | 0 | 0 | 0 | 0 | 0 | 100 |
| | sebacic acid | | 100 | 100 | 100 | 100 | 100 | 100 | 100 | 0 |
| Physical Properties | Relative Viscosity ηr | | 2.3 | 2.3 | 2.3 | 2.3 | 2.3 | 2.3 | 2.2 | 2.1 |
| | Melting Point Tm (°C) | | 191.3 | 191.3 | 191.3 | 191.3 | 191.3 | 191.3 | 212.0 | 237.4 |
| | Number-Average Molecular Weight Mn | | 19361 | 19361 | 19361 | 19361 | 19361 | 19361 | 18399 | 15420 |
| Modified Polyolefin Resin (b-2) | | | b2-1 | b2-2 | b2-3 | b2-4 | b2-4 | b2-4 | b2-2 | b2-2 |
| Type | | | AMPLIFY GR204 | Fusabond E265 | Adtex L6100M | Fusabond N498 | Fusabond N498 | Fusabond N498 | Fusabond E265 | Fusabond E265 |
| Density (g/cm³) | | | 0.954 | 0.95 | 0.92 | 0.86 | 0.86 | 0.86 | 0.95 | 0.95 |
| Degree of Modification with Maleic Anhydride (mass%) | | | 1 | 1 | 0.8 | 0.5 | 0.5 | 0.5 | 1 | 1 |
| Content *1 | | | 11 | 11 | 11 | 5 | 11 | 25 | 11 | 11 |
| Cylindrical Molded Body (thickness, 5 mm) | Layer Configuration | | A/B/A | A/B/A | A/B/A | A/B/A | A/B/A | A/B/A | A/B/A | A/B/A |
| | Thickness of Layer (B) (mm) | | 0.2 | 0.2 | 0.2 | 0.2 | 0.2 | 0.2 | 0.2 | 0.2 |
| Molding Temperature | Temperature for extruding Layer (A) (°C) | | 200 | 200 | 200 | 200 | 200 | 200 | 200 | 200 |
| | Temperature for extruding Layer (B) (°C) | | 240 | 240 | 240 | 240 | 240 | 240 | 260 | 270 |
| | Flow Channel Temperature after Lamination (°C) | | 240 | 240 | 240 | 240 | 240 | 240 | 260 | 270 |
| Evaluation | Flexibility | Wrinkles Formation | No | No | No | No | No | No | No | No |
| | Fuel Barrier Properties | Oil Odor 1 month | No | No | No | No | No | No | No | No |
| | | 6 months | No | No | No | No | No | No | No | No |
| | | 12 months | No | No | No | No | No | Yes, slightly | No | No |

MXDA: metaxylylenediamine
PXDA: paraxylylenediamine
*1: part by mass relative to 100 parts by mass of polyamide resin (b-1)

EP 3 040 201 B1

Table 1 (2/2)

| | | | Example | | | Comparative Example | | | |
|---|---|---|---|---|---|---|---|---|---|
| | | | 9 | 10 | 11 | 1 | 2 | 3 | 4 |
| Polyolefin Layer (A) | | | PE | PE | PE | PE | PE | PE | PE |
| Polyamide Resin Composition Layer (B) | | | B-9 | B-12 | B-13 | | b1-1 | B-10 | B-11 |
| | Polyamide Resin (b-1) | | b1-4 | b1-1 | b1-1 | | b1-1 | b1-1 | b1-1 |
| | Diamine (molar ratio) | xylylenediamine | 100 | 100 | 100 | | 100 | 100 | 100 |
| | | MXDA:PXDA molar ratio | 70:30 | 100:0 | 100:0 | | 100:0 | 100:0 | 100:0 |
| | Dicarboxylic Acid (molar ratio) | adipic acid | 100 | 0 | 0 | | 0 | 0 | 0 |
| | | sebacic acid | 0 | 100 | 100 | | 100 | 100 | 100 |
| | Physical Properties | Relative Viscosity $\eta r$ | 2.07 | 2.3 | 2.3 | | 2.3 | 2.3 | 2.3 |
| | | Melting Point Tm (°C) | 257.0 | 191.3 | 191.3 | | 191.3 | 191.3 | 191.3 |
| | | Number-Average Molecular Weight Mn | 16623 | 19361 | 19361 | | 19361 | 19361 | 19361 |
| | Modified Polyolefin Resin (b-2) | | b2-1 | b2-5 | b2-5 | | | b2-1 | b2-1 |
| | Type | | AMPLIFY GR204 | Apolhya LP21H | Apolhya LP21H | | | AMPLIFY GR204 | AMPLIFY GR204 |
| | Density (g/cm³) | | 0.954 | 0.99 | 0.99 | | | 0.954 | 0.954 |
| | Degree of Modification with Maleic Anhydride (mass%) | | 1 | - | - | | | 1 | 1 |
| | Content *1 | | 11 | 11 | 25 | | | 3 | 33 |
| Cylindrical Molded Body (thickness, 5 mm) | Layer Configuration | | A/B/A | A/B/A | A/B/A | A | A/B/A | A/B/A | A/B/A |
| | Thickness of Layer (B) (mm) | | 0.2 | 0.2 | 0.2 | - | 0.2 | 0.2 | 0.2 |
| Molding Temperature | Temperature for extruding Layer (A) (°C) | | 200 | 200 | 200 | 200 | 200 | 200 | 200 |
| | Temperature for extruding Layer (B) (°C) | | 280 | 240 | 240 | - | 240 | 240 | 240 |
| | Flow Channel Temperature after Lamination (°C) | | 280 | 240 | 240 | - | 240 | 240 | 240 |
| Evaluation | Flexibility | Wrinkles Formation | No | No | No | No | Yes | Yes | extrusion failure |
| | Fuel Barrier Properties | Oil Odor | 1 month | No | No | No | Yes | No | No |
| | | | 6 months | No | No | No | - | No | No |
| | | | 12 months | No | No | Yes, slightly | - | No | No |

MXDA: metaxylylenediamine
PXDA: paraxylylenediamine
*1: part by mass relative to 100 parts by mass of polyamide resin (b-1)

EP 3 040 201 B1

From Comparative Example 1, it is known that oil penetrates into the inside of the already-existing polyethylene single-layer cylindrical molded body, and the tap water therein has oil odor, and the molded body is poor in fuel barrier properties.

From Comparative Example 2, it is known that the cylindrical molded body having a layer of a polyamide containing a xylylenediamine-derived constituent unit in place of the polyamide resin composition layer (B) is poor in flexibility.

From Comparative Example 3, it is known that, when the content of the modified polyolefin (b-2) therein is too small, the flexibility of the cylindrical molded body is poor. From Comparative Example 4, it is known that, when the content of the modified polyolefin (b-2) therein is too large, the molding processability of the cylindrical molded body is poor. and there occurs extrusion failure.

As opposed to these, in Examples 1 to 11, the cylindrical molded bodies have no wrinkles and the tap water therein has no oil odor, and it is known that the cylindrical molded bodies are excellent in both flexibility and fuel barrier properties since they each has the polyamide resin composition layer (B).

Industrial Applicability

The multilayer structure of the present invention is a multilayer structure excellent in flexibility and fuel barrier properties, not losing the excellent flexibility of polyolefin-made ones. Accordingly, the multilayer structure can prevent penetration of fuel such as kerosene and the like, and is therefore favorable as water service piping to be buried in the earth, especially as water service piping for water supply.

**Claims**

1. A multilayer structure including a polyolefin layer (A) and a polyamide resin composition layer (B), wherein:

   the polyamide resin composition constituting the layer (B) comprises a polyamide resin (b-1) in which a diamine constituent unit thereof comprises a constituent unit derived from a xylylenediamine and a dicarboxylic acid constituent unit thereof comprises a constituent unit derived from an $\alpha,\omega$-linear aliphatic dicarboxylic acid having from 4 to 20 carbon atoms and a modified polyolefin (b-2); and
   the content of the modified polyolefin (b-2) is from 5 to 30 parts by mass relative to 100 parts by mass of the polyamide resin (b-1), and wherein
   the multilayer structure is a cylindrical molded body and the ratio of the thickness of the polyamide resin composition layer (B) to the thickness of the cylindrical molded body is from 0.005 to 0.5.

2. The multilayer structure according to claim 1, wherein the modified polyolefin (b-2) is a polyolefin modified with a carboxyl group-containing monomer, or a polyolefin graft-modified with a polyamide.

3. The multilayer structure according to claim 2, wherein the polyolefin modified with a carboxyl group-containing monomer is a maleic anhydride-modified polyethylene.

4. The multilayer structure according to claim 2, wherein the polyamide for graft formation is at least one selected from the group consisting of nylon 6, nylon 66, nylon 11, nylon 12, nylon 612 and copolymers thereof.

5. The multilayer structure according to any one of claims 1 to 4, wherein the degree of modification of the modified polyolefin (b-2) is from 0.2 to 5% by mass.

6. The multilayer structure according to any one of claims 1 to 5, wherein the density of the modified polyolefin (b-2) is 0.85 g/cm$^3$ or more.

7. The multilayer structure according to any one of claims 1 to 6, wherein the weight-average molecular weight of the modified polyolefin (b-2) is from 10,000 to 150,000.

8. The multilayer structure according to any one of claims 1 to 7, having one layer or two or more layers of each of the polyolefin layer (A) and the polyamide resin composition layer (B).

9. The multilayer structure according to any one of claims 1 to 8, wherein the polyamide resin (b-1) is a polyamide in which the diamine constituent unit contains a constituent unit derived from metaxylylenediamine, and the dicarboxylic acid constituent unit contains a constituent unit derived from sebacic acid.

**10.** The multilayer structure according to claim 1, comprising at least a layer configuration in an order of the polyolefin layer (A) and the polyamide resin composition layer (B) from the inside.

**11.** Use of a multilayer structure according to claim 1 for water service piping.

**Patentansprüche**

**1.** Eine mehrschichtige Struktur, die eine Polyolefinschicht (A) und eine Polyamidharzzusammensetzungsschicht (B) beinhaltet, wobei:

die Polyamidharzzusammensetzung, die die Schicht (B) bildet, ein Polyamidharz (b-1), in dem eine konstituierende Diamineinheit desselben eine von einem Xylylendiamin abgeleitete konstituierende Einheit umfasst und eine konstituierende Dicarbonsäureeinheit desselben eine von einer $\alpha,\omega$-linearen aliphatischen Dicarbonsäure mit 4 bis 20 Kohlenstoffatomen abgeleitete konstituierende Einheit umfasst, und ein modifiziertes Polyolefin (b-2) umfasst; und
der Gehalt des modifizierten Polyolefins (b-2) 5 bis 30 Massenteile, bezogen auf 100 Massenteile des Polyamidharzes (b-1), beträgt und wobei
die mehrschichtige Struktur ein zylindrischer Formkörper ist und das Verhältnis der Dicke der Polyamidharzzusammensetzungsschicht (B) zur Dicke des zylindrischen Formkörpers 0,005 bis 0,5 beträgt.

**2.** Die mehrschichtige Struktur nach Anspruch 1, wobei das modifizierte Polyolefin (b-2) ein mit einem Carboxylgruppen enthaltenden Monomer modifiziertes Polyolefin oder ein mit einem Polyamid pfropfmodifiziertes Polyolefin ist.

**3.** Die mehrschichtige Struktur nach Anspruch 2, wobei das mit einem Carboxylgruppen enthaltenden Monomer modifizierte Polyolefin ein Maleinsäureanhydrid-modifiziertes Polyethylen ist.

**4.** Die mehrschichtige Struktur nach Anspruch 2, wobei das Polyamid zur Pfropfbildung mindestens eines ausgewählt aus der Gruppe bestehend aus Nylon 6, Nylon 66, Nylon 11, Nylon 12, Nylon 612 und Copolymeren davon ist.

**5.** Die mehrschichtige Struktur nach einem der Ansprüche 1 bis 4, wobei der Modifizierungsgrad des modifizierten Polyolefins (b-2) 0,2 bis 5 Massen-% beträgt.

**6.** Die mehrschichtige Struktur nach einem der Ansprüche 1 bis 5, wobei die Dichte des modifizierten Polyolefins (b-2) 0,85 g/cm$^3$ oder mehr beträgt.

**7.** Die mehrschichtige Struktur nach einem der Ansprüche 1 bis 6, wobei das Gewichtsmittel des Molekulargewichts des modifizierten Polyolefins (b-2) 10.000 bis 150.000 beträgt.

**8.** Die mehrschichtige Struktur nach einem der Ansprüche 1 bis 7, welche jeweils eine Schicht oder zwei oder mehr Schichten der Polyolefinschicht (A) und der Polyamidharzzusammensetzungsschicht (B) aufweist.

**9.** Die mehrschichtige Struktur nach einem der Ansprüche 1 bis 8, wobei das Polyamidharz (b-1) ein Polyamid ist, bei dem die konstituierende Diamineinheit eine von Metaxylylendiamin abgeleitete konstituierende Einheit enthält und die konstituierende Dicarbonsäureeinheit eine von Sebacinsäure abgeleitete konstituierende Einheit enthält.

**10.** Die mehrschichtige Struktur nach Anspruch 1, umfassend mindestens einen Schichtaufbau in einer Reihenfolge der Polyolefinschicht (A) und der Polyamidharzzusammensetzungsschicht (B) von der Innenseite.

**11.** Verwendung einer mehrschichtigen Struktur nach Anspruch 1 für Wasserversorgungsleitungen.

**Revendications**

**1.** Structure multicouche contenant une couche de polyoléfine (A) et une couche de composition de résine de polyamide (B), dans laquelle :

la composition de résine de polyamide constituant la couche (B) comprend une résine de polyamide (b-1) dans laquelle un motif constitutif diamine de celle-ci comprend un motif constitutif dérivé d'une xylylènediamine et un motif constitutif acide dicarboxylique de celle-ci comprend un motif constitutif dérivé d'un acide dicarboxylique aliphatique $\alpha,\omega$-linéaire ayant de 4 à 20 atomes de carbone et une polyoléfine modifiée (b-2) ;

la teneur en la polyoléfine modifiée (b-2) est de 5 à 30 parties en masse pour 100 parties en masse de la résine de polyamide (b-1),

et dans laquelle la structure multicouche est un corps moulé cylindrique et le rapport de l'épaisseur de la couche de composition de résine de polyamide (B) à l'épaisseur du corps moulé cylindrique est de 0,005 à 0,5.

2. Structure multicouche selon la revendication 1, dans laquelle la polyoléfine modifiée (b-2) est une polyoléfine modifiée par un monomère contenant un groupe carboxyle, ou une polyoléfine modifiée par greffage avec un polyamide.

3. Structure multicouche selon la revendication 2, dans laquelle la polyoléfine modifiée par un monomère contenant un groupe carboxyle est un polyéthylène modifié par de l'anhydride maléique.

4. Structure multicouche selon la revendication 2, dans laquelle le polyamide pour la formation du greffage est au moins l'un choisi dans l'ensemble constitué par le nylon 6, le nylon 66, le nylon 11, le nylon 12, le nylon 612 et leurs copolymères.

5. Structure multicouche selon l'une quelconque des revendications 1 à 4, dans laquelle le degré de modification de la polyoléfine modifiée (b-2) est de 0,2 à 5 % en masse.

6. Structure multicouche selon l'une quelconque des revendications 1 à 5, dans laquelle la masse volumique de la polyoléfine modifiée (b-2) est de 0,85 g/cm$^3$ ou plus.

7. Structure multicouche selon l'une quelconque des revendications 1 à 6, dans laquelle la masse moléculaire moyenne en masse de la polyoléfine modifiée (b-2) est de 10 000 à 150 000.

8. Structure multicouche selon l'une quelconque des revendications 1 à 7, ayant une couche ou deux couches ou plus de chacune parmi la couche de polyoléfine (A) et la couche de composition de résine de polyamide (B).

9. Structure multicouche selon l'une quelconque des revendications 1 à 8, dans laquelle la résine de polyamide (b-1) est un polyamide dans lequel le motif constitutif diamine contient un motif constitutif dérivé de métaxylylènediamine, et le motif constitutif acide dicarboxylique contient un motif constitutif dérivé d'acide sébacique.

10. Structure multicouche selon la revendication 1, comprenant au moins une configuration de couches dans l'ordre de la couche de polyoléfine (A) et de la couche de composition de résine de polyamide (B) depuis l'intérieur.

11. Utilisation de la structure multicouche de la revendication 1 pour des canalisations d'alimentation en eau.

**EP 3 040 201 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4230060 B
- CA 2509518
- CA 2461389
- EP 1562749 A
- JP H08502806 B
- JP S6281437 A
- JP 2002340242 A